# EUROPEAN PATENT SPECIFICATION

(11) **EP 1 237 676 B1**
(45) Date of publication and mention of the grant of the patent: **09.01.2008**
(21) Application number: 00974695.9
(22) Date of filing: 13.11.2000
(51) Int. Cl.: B23K 11/00

(54) **MULTI WIDTH PANEL FABRICATING MACHINE**
VORRICHTUNG ZUM HERSTELLEN VON MULTIBREITPLATTEN
MACHINE DE FABRICATION DE PANNEAUX DE LARGEURS MULTIPLES

(30) Priority: 12.11.1999 GB 9926773
(43) Date of publication of application: 11.09.2002
(73) Proprietor: Structherm Ltd, Huddersfield, Yorkshire HD7 3AP (GB)
(72) Inventor: GOULD, Tom Structherm Ltd., Huddersfield Yorkshire HD7 3AP (GB); DICKINSON, Michael Structherm Ltd., Huddersfield Yorkshire HD7 3AP (GB)
(74) Representative: Knowles, James Atherton
(86) International application number: PCT/GB2000/004337
(87) International publication number: WO 2001/034338

(56) References cited:
- EP-A- 0 094 809
- DE-A- 4 402 869
- US-A- 2 390 174

## Description

The invention relates to a machine for fabricating building panels in a variety of widths, in particular, but not exclusively building panels having an insulated core.

Building panel fabrication machines are well known in the art, see e.g. DE-A-44 02 869, which is considered to represent the closest prior art over the invention, but typically such machines typically such machines are designed to produce panels of a particular width, usually in high volumes. If panels of a variety of widths are to be manufactured, the machine generally requires extensive modification. This is clearly undesirable as it results in the loss of production facilities. The alternative would be to have a variety of machines which would increase capital expenditure.

The present invention seeks to provide a machine for fabricating building panels in a variety of widths, the width of which panels can be easily changed.

According to the present invention there is provided an apparatus for manufacturing a building panel, which panel comprises a plurality of truss elements, the apparatus comprising an alignment mechanism adapted to align the truss elements with respect to one another, an indexing mechanism for moving the panel through the apparatus, a welding station adapted to weld a wire to or adjacent to the apices of the truss elements to form a panel and a cutter for removing excess wire from the panel, characterised in that the alignment mechanism comprises a plurality of rollers arranged in two sets in planes substantially perpendicular to one another, the position of a first set of rollers, comprising two groups of spatially separated rollers, the positions of which first set of rollers are adjustable in a horizontal plane for aligning the truss elements, and the position of a second set of rollers, for compressing the panel, being adjustable in a vertical plane.

Preferably, wherein the alignment mechanism comprises a plurality of spatially separated pluralities of rollers in three planes, in particular a plurality of pairs of rollers spatially separated from one another in three planes.

Preferably, the indexing mechanism comprises a plurality of spatially separated cylinders, each cylinder having a pin attached to its free end, which pin, in use, is adapted to engage with the panel, the stroke of the cylinder thereby urging the panel through the apparatus. The mechanism may be an indexing part that pivots around an attachment on the end of the cylinder's free end. When engaged the indexing part locks solid to move the panel via the serrated edge under the panel. On the return stroke the indexing part pivots out of the way of the serrated edge to return to the start position. The rate at which the indexing occurs is controlled pneumatic restrictor valve and the length of the stroke is governed by limit switches, which are adjustable. The maximum indexing distance is governed by the maximum stroke length of the cylinder.

Preferably, at the end of the stroke the pin pivots out of position to enable the piston to return to a start position.

Preferably, the welding station comprises a gripper mechanism adapted to draw wire from a wire coil into position adjacent the truss elements so that the wire can be welded to the truss elements by a plurality of welding heads, thereby forming the building panel.

Preferably, coolant is provided to the welding head, welding station transformers and control units to ensure that these remain at a substantially constant temperature.

In a particularly preferred embodiment insulating material is provided between adjacent truss elements and the rollers of the alignment mechanism compress the insulating material and the truss elements thereby ensuring that the insulating material and truss elements are aligned. Preferably, a first pair of rollers is directable in an opposite direction to a second pair of rollers, so that the insulating material is aligned off centre from the truss elements. The rollers rotate from a panel being indexed through them due to friction between the roller surface and that of the insulant.

An exemplary embodiment of the invention will now be described in greater detail with reference to the drawings in which,
Figure 1 shows an assembled panel;
Figure 2 shows a panel assembly area;

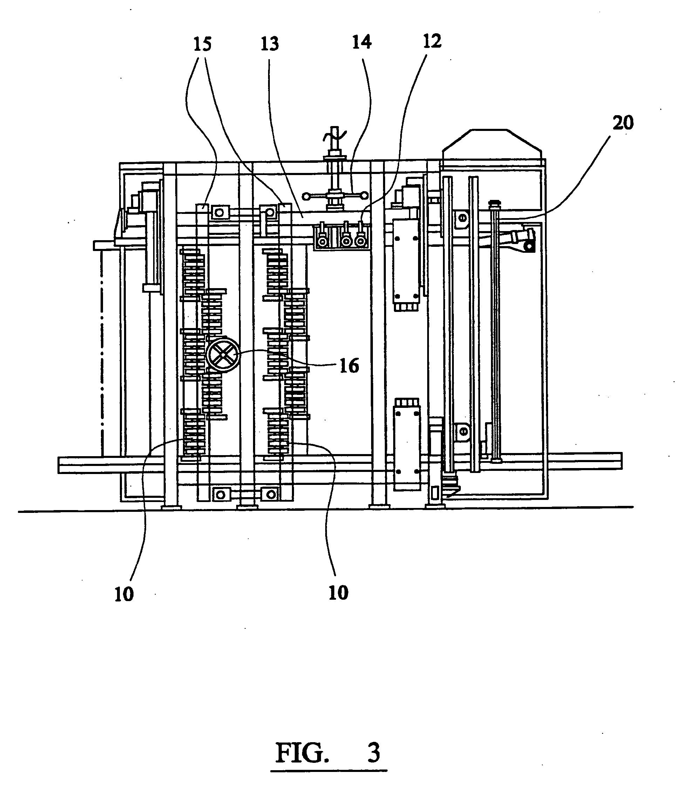

Figure 3 shows a side view of the apparatus;

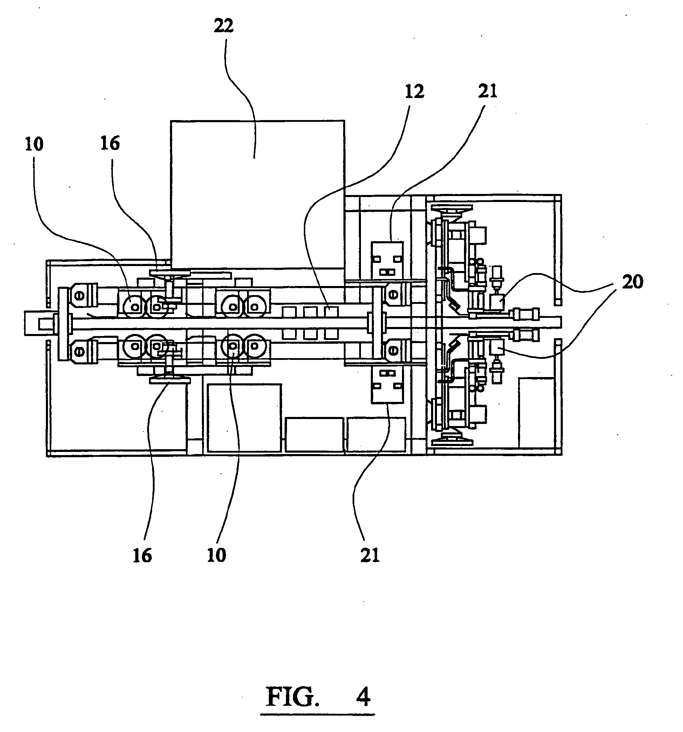

Figure 4 shows a top view of apparatus;

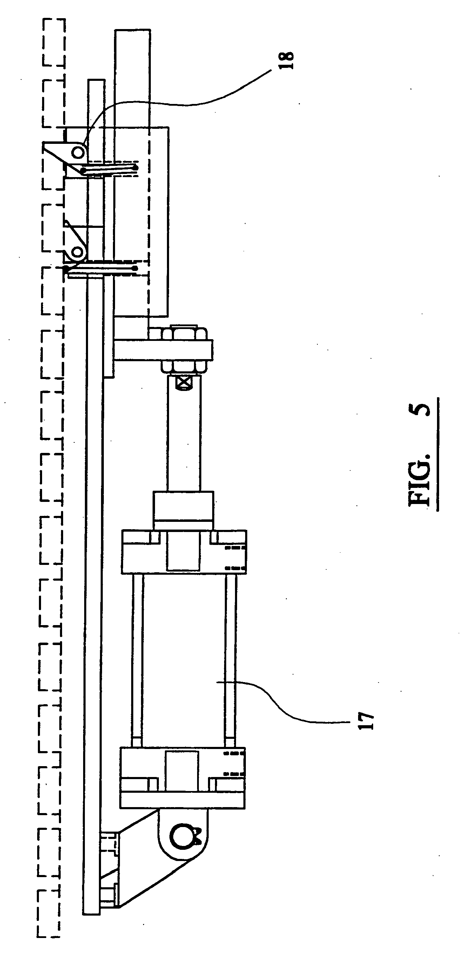

Figure 5 shows a detail of the indexing unit.

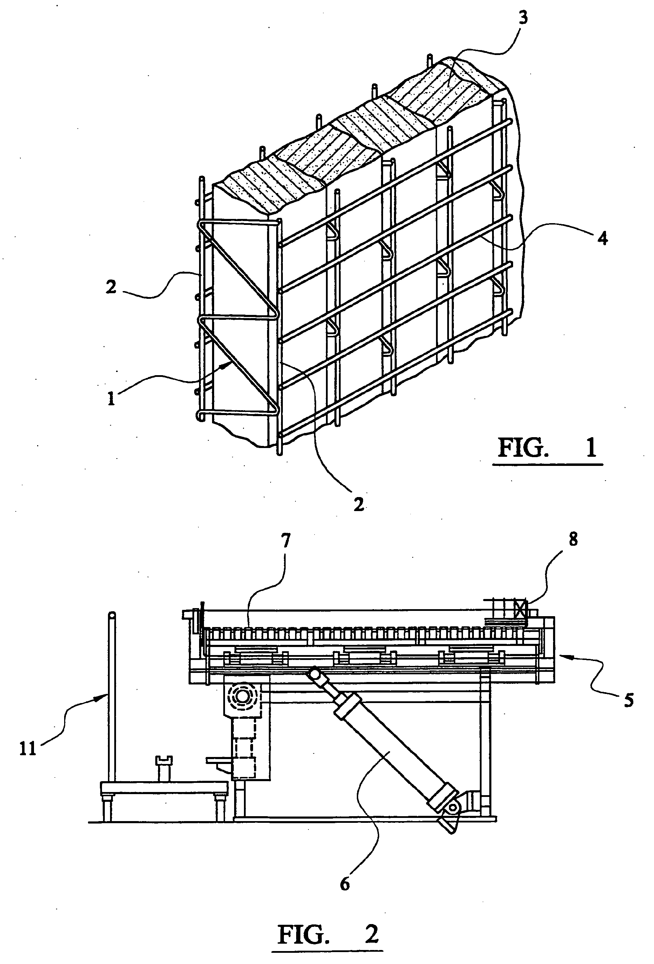

Figure 1 shows an exemplary panel suitable for production in the machine according to the invention. The panel comprises a plurality of truss elements 1 having a zig-zag form, with tie wires 2 extending along the length of the truss, each tie wire being welded adjacent an apex of the zig-zag form. In between the truss elements strips of insulating 3 material are located. The panel is formed by welding further tie wires 4 perpendicular to the first tie wires on both sides of the panel. A typical building panel constructed according the invention comprises a plurality of alternating truss elements and strips of insulating material with a truss element at each end of the panel.

The panel assembly area comprises an assembly table 5 which can be tilted between horizontal and vertical positions by a pneumatic cylinder 6. The table 5 has a first load bearing surface provided by a plurality of slats 7 mounted on a second load bearing surface, which slats 7 extend along the table 5 transverse and perpendicular to the plane in which the table 5 tilts. The table transverse to the slats 7 is provided with a datum 8 for the bottom face of the panel frame and the front face of the panel frame. This is due to the panel size can be 1m to 1.5m, no matter what height the panel is the bottom part of the panel will always be the same. The same applies to the length of 1m to 3.6m as the front of the panel will always be the same)

In use, truss elements of a building panel are slotted into the gaps between the slats 7, and strips of insulating material are slotted in between the truss elements. The datum is used to ensure that the ends of each truss and strip of insulating material are aligned with one another. The distance between the first and second load bearing surface determines the location height of the insulation. Typically, this will means that the centreline of the truss element and the strip of insulating material will co-incide, although for certain panels this is not the case. The panel is then lightly compressed to hold the truss elements and insulation in place and the table is then tilted into a vertical position by the pneumatic cylinder 6. The panel is then removed from the table and placed onto a panel trolley.

The trolley 11 is then moved so as to present the loosely assembled panel to an alignment mechanism. The alignment mechanism comprises two groups of eight banks of rollers 10 arranged as four spatially separated pairs in two planes. The two planes are separated by a distance equivalent to the width of the panel to be produced. Each bank of rollers itself comprises a plurality of aligned rollers.

As the panel is indexed through the alignment mechanism, the first set of rollers 10 ensures that the truss elements and insulation are in the desired position. The second set of rollers 12, comprising three rollers, is located in plane perpendicular to the first set of rollers, compresses the panel frame. The position of each roller is adjustable to allow for panels of different height, width, length, wire type, insulation type and in case the centreline of the insulation needs to be off set from the centreline of the truss. The trolley does not go through the machine, only the panel and the panel frame. The trolley is used to transport the panel and panel frame into the machine where it is then indexed through the machine and the panel frame are pulled off of the trolley. At the other end of the machine, the complete panel is indexed onto a second trolley. The panel is removed and the trolley is then used to transport the empty panel frame back to the assembly table where a new panel is assembled.

The top beam and its compressing rollers are adjustable in the vertical plane to suit the panel height (e.g. 1 to 1.5m). The compression rollers are attached via a vertical member to an upper beam 13, which upper beam can be translated in the vertical plane via a lockable screw mechanism 14 fixed to the frame of the apparatus. The first set of rollers at the point where the trusses enter the machine align the insulation centreline with the truss centreline. These rollers are supported on a vertical member 15, the position of which in the horizontal plane can be adjusted via a second set of lockable screw means 16. The mechanisms are in two halves, one for each side of the machine. Each one can be independently adjusted. The adjustment at the front of the machine again is in two halves, one for each set of welding apparatus again by means of a lockable screw means. The four previously mentioned items are adjustable to allow for the different panel widths, wire thickness and in case the insulation is offset from the centreline of the trass.

The trusses are held in position by the vertical compression force. The trusses are first laid in the correct position on the assembly table and lightly clamped. As the loose panel goes through the rollers the insulation is aligned with the truss and the panel is gradually compressed further to ensure that the insulation and truss do not move. If one group of rollers were to move in a positive direction and the other in a negative direction, the insulation would be offset to that of the truss.

The indexing mechanism for moving the panel through the machine comprises a plurality of pneumatic cylinders 17 spaced substantially equidistantly from one another along the underside of the bottom rail. Each cylinder has a pin 18 attached to its free end. In use, the pin engages the underside of the panel frame, which is serrated and urges the panel through the machine. At the end of the cylinder stroke, the pin pivots out of position and enables the cylinder to return to its start position without fouling on the frame. Each cylinder is synchronised with the others to ensure a smooth progression through the machine (and to allow for the variety of panel lengths).

Once the constituent elements of the panel have been aligned and compressed, they are fed to a welding station, in which a wire is welded to or adjacent to the apices of the truss elements.

Wire is fed to the welding station from coils, a typical example would be 500 kg. The wire is fed through a series of guiding pulleys located towards the upper side of the machine, and then through vertical and horizontal wire straighteners below the guiding pulleys into a gripping mechanism 19, which is located on the inside face of the rodless cylinders to hold the wire in position. The motion of the gripper is controlled by a rodless cylinder 20. The strength of the cylinders, which are adapted to move up and down, draws the wire through and over the pulley system and off of the formers. When the wire is drawn down, a set of grippers holds the end piece of wire. The wire grippers then return to the top position ready to repeat the process. Once in position the welding heads are actuated to weld the wire to truss elements.

The welding apparatus comprises four 100KVA transformers 21, each of which is adapted to power up to 25% of the weld heads. Each transformer has 4 settings. They can be set to 25%, 50%, 75% or 100% of its available power. Current travels from the transformer into a first bus bar and then to the weld head, through the weld materials into the weld fingers and into a second bus bar and the back to the transformer. A cooler unit 22 is provided which provides coolant to the transformers, weld control units and the weld heads to help maintain a constant temperature and reduce the chances of any manufacturing errors which might occur due to heat expansion.

Once the wire has been welded to the trusses, excess material is removed by trimmers located at the top and bottom of the panel. The trimmers are pneumatically powered and are adjustable so as to cope with the variety of the panel sizes that the machine can produce. The trimmers are fixed to the different adjustable sections. If the front, right hand side is moved out, then the front, right hand section including the rodless cylinder, weld fingers, wire straightners, trimmers (top and bottom), etc. would also move out.

The machine is provided with a control system to control the automated cycles of the machine. The control system can be used to control the welding station and in particular, the output of the transformers may be adjusted depending on the panel to be produced. Depending on the parameters used not all of the welding heads will be required and so some weld heads can be turned off. Each weld head cylinder can be independently isolated to match the required panel height and type to be produced.

The machine is suitable for fabricating panels in a variety of lengths, heights and widths, e.g. 75mm to 150mm in 25mm increments (widths), 1000mm to 1500mm in 50mm increments (height) and 1000mm to 3600mm in 50mm increments (length).

Although the panel has generally been described as having an insulated core, for certain applications this may be dispensed with.

## Claims

1. Apparatus for manufacturing a building panel, which panel comprises a plurality of truss elements (1), the apparatus comprising an alignment mechanism adapted to align the truss elements (1) with respect to one another, an indexing mechanism for moving the panel through the apparatus, a welding station adapted to weld a wire (4) to or adjacent to the apices of the truss elements (1) to form a panel and a cutter for removing excess wire from the panel, **characterised in that** the alignment mechanism comprises a plurality of rollers (10, 12) arranged in two sets in planes substantially perpendicular to one another, the position of a first set of rollers (10), comprising two groups of spatially separated rollers, the positions of which first set of rollers (10) are adjustable in a horizontal plane for aligning the truss elements (1), and the position of a second set of rollers (12), for compressing the panel, being adjustable in a vertical plane.

2. Apparatus according to Claim 1, wherein the alignment mechanism comprises a plurality of spatially separated pluralities of rollers (10, 12) in three planes.

3. Apparatus according to Claim 2, wherein the alignment mechanism comprises a plurality of pairs of rollers (10,12) spatially separated from one another in three planes.

4. Apparatus according to any one of Claims 1 to 3, wherein the indexing mechanism comprises a plurality of spatially separated cylinders (17), each cylinder having a pin (18) attached to its free end, which pin (18), in use, is adapted to engage with the panel, the stroke of the cylinder thereby urging the panel through the apparatus.

5. Apparatus according to Claim 4, wherein at the end of the stroke the pin (18) pivots out of position to enable the cylinder (18) to return to a start position.

6. Apparatus according to any one of Claims 1 to 5, wherein the welding station comprises a gripper mechanism (19) adapted to draw wire from a wire coil into position adjacent the truss elements (1) so that the wire can be welded to the truss elements by a welding head, thereby forming the building panel.

7. Apparatus according to any one of Claims 1 to 6, wherein coolant is provided to the welding head, welding station transformers (21) and control units to ensure that these remain at a substantially constant temperature.

8. Apparatus according to any one of Claims 1 to 7, wherein insulating material (3) is provided between adjacent truss elements (1) and the rollers (10, 12) of the alignment mechanism compress the insulating material (3) and the truss elements (I) thereby ensuring that the insulating material (3) and truss elements (1) are aligned.

9. Apparatus according to Claim 8, wherein a first group and a second group of rollers (10) are moveable in an opposite direction, so that the insulating material (3) is aligned off centre from the truss elements (1).

## Patentansprüche

1. Vorrichtung für die Herstellung eines Bauelements, das mehrere Gitterträgerelemente (1) umfasst, wobei die Vorrichtung Folgendes umfasst; einen Ausrichtmechanismus, der so ausgelegt ist, dass er die Gitterträgerelemente (1) in Bezug aufeinander ausrichtet, einen Rastmechanismus, mit dem das Bauelement durch die Vorrichtung bewegt werden kann, eine Schweißstation, die so ausgelegt ist, dass sie einen Draht (4) so an die oder neben den Spitzen der Gitterträgerelemente (1) anschweißt, dass ein Element entsteht, und eine Schneidvorrichtung, mit der überflüssiger Draht von dem Element entfernt werden kann, **dadurch gekennzeichnet, dass** der Ausrichtmechanismus mehrere Rollen (10, 12) umfasst, die in zwei Reihen auf zwei Ebenen angeordnet sind, die im Wesentlichen senkrecht zueinander verlaufen, wobei die Position einer ersten Reihe von Rollen (10), die zwei Gruppen räumlich voneinander getrennter Rollen umfasst, deren Positionen zum Ausrichten der Gitterträgerelemente (1) in einer horizontalen Ebene verstellbar sind, und die Position einer zweiten Reihe von Rollen (12) zum Komprimieren des Elements in einer vertikalen Ebene verstellbar ist.

2. Vorrichtung nach Anspruch 1, bei der der Ausrichtmechanismus mehrere räumlich voneinander getrennte Mehrfach-Rollen (10, 12) auf drei Ebenen umfasst.

3. Vorrichtung nach Anspruch 2, bei der der Ausrichtmechanismus mehrere räumlich voneinander getrennte Rollenpaare (10, 12) auf drei Ebenen umfasst.

4. Vorrichtung nach einem der Ansprüche 1 bis 3, bei der der Rastmechanismus mehrere räumlich voneinander getrennte Zylinder (17) umfasst, wobei jeder Zylinder einen Stift (18) aufweist, der an seinem freien Ende angebracht ist, wobei der Stift (18) so ausgelegt ist, dass er im Gebrauch in das Element eingreift, und der Hub des Zylinders dadurch das Element durch die Vorrichtung schiebt.

5. Vorrichtung nach Anspruch 4, bei der der Stift (18) am Ende des Hubs aus der Position schwenkt, damit der Zylinder (17) in eine Ausgangsposition zurückkehren kann.

6. Vorrichtung nach einem der Ansprüche 1 bis 5, bei der die Schweißstation einen Greifmechanismus (19) umfasst, der so ausgelegt ist, dass er Draht von einer Drahtspule in eine Position neben den Gitterträgerelementen (1) abzieht, so dass der Draht von einem Schweißkopf an die Gitterträgerelemente angeschweißt werden kann, wodurch das Bauelement gebildet wird.

7. Vorrichtung nach einem der Ansprüche 1 bis 6, bei der der Schweißkopf, die Transformatoren (21) der Schweißstation und die Steuereinheiten mit Kühlmittel versorgt werden, um sicherzustellen, dass diese eine im Wesentlichen konstante Temperatur beibehalten.

8. Vorrichtung nach einem der Ansprüche 1 bis 7, bei der sich zwischen nebeneinander liegenden Gitterträgerelementen (1) Isoliermaterial (3) befindet und die Rollen (10, 12) des Ausrichtmechanismus das Isoliermaterial (3) und die Gitterträgerelemente (1) komprimieren, wodurch sie sicherstellen, dass das Isoliermaterial (3) und die Gitterträgerelemente (1) ausgerichtet werden.

9. Vorrichtung nach Anspruch 8, bei der sich eine erste Gruppe und eine zweite Gruppe von Rollen (10) in entgegengesetzter Richtung bewegen lassen, so dass das Isoliermaterial (3) außerhalb der Mitte der Gitterträgerelemente (1) ausgerichtet wird.

## Revendications

1. Appareil pour la fabrication d'un panneau de construction, ledit panneau comprenant une pluralité d'éléments formant armature (1), l'appareil comprenant un mécanisme d'alignement adapté pour aligner les éléments formant armature (1) les uns relativement aux autres, un mécanisme d'indexage pour le déplacement du panneau à travers l'appareil, un poste de soudage adapté pour souder un fil métallique (4) aux sommets des éléments formant armature (1) ou à proximité de ces sommets de sorte à former un panneau, et un dispositif de coupe pour enlever du panneau le fil en excédent, **caractérisé en ce que** le mécanisme d'alignement comprend une pluralité de galets (10,12) disposés en deux ensembles dans des plans sensiblement perpendiculaires l'un à l'autre, la position d'un premier ensemble de galets (10), comprenant deux groupes de galets séparés dans l'espace, la position dudit premier ensemble de galets (10) étant ajustable dans un plan horizontal pour aligner les éléments formant armature (1) et la position d'un second ensemble de galets (12), prévu pour la compression du panneau, étant ajustable dans un plan vertical.

2. Appareil selon la revendication 1, dans lequel le mécanisme d'alignement comprend, dans trois plans, plusieurs pluralités de galets (10,12), séparées dans l'espace.

3. Appareil selon la revendication 2, dans lequel le mécanisme d'alignement comprend, dans trois plans, une pluralité de paires de galets (10,12) séparées les unes des autres dans l'espace.

4. Appareil selon l'une quelconque des revendications 1 à 3, dans lequel le mécanisme d'indexage comprend une pluralité de cylindres (17) séparés dans l'espace, chaque cylindre ayant une tige (18) attachée à son extrémité libre, ladite tige (18) étant adaptée, pendant l'emploi, pour s'engager avec le panneau, la course du cylindre faisant ainsi avancer le panneau à travers l'appareil.

5. Appareil selon la revendication 4 dans lequel, à la fin de la course, la tige (18) pivote hors de sa position pour permettre au cylindre (17) de revenir à sa position de départ.

6. Appareil selon l'une quelconque des revendications 1 à 5, dans lequel le poste de soudage comprend un mécanisme de saisie (19) adapté pour dérouler un fil métallique à partir d'un rouleau de fil en position adjacente aux éléments formant armature (1) de sorte à ce que le fil puisse être soudé sur les éléments formant armature par une tête de soudage, formant ainsi le panneau de construction.

7. Appareil selon l'une quelconque des revendications 1 à 6, dans lequel un réfrigérant alimente la tête de soudage, les transformateurs du poste de soudage (21) et les ensembles de commande pour garantir que ces éléments demeurent à une température sensiblement constante.

8. Appareil selon l'une quelconque des revendications 1 à 7, dans lequel un matériau isolant (3) est prévu entre les éléments formant armature(1) adjacents, et les galets (10,12) du mécanisme d'alignement compriment le matériau isolant (3) et les éléments formant armature (1) pour assurer l'alignement du matériau isolant (3) et des éléments formant armature (1).

9. Appareil selon la revendication 8, dans lequel un premier groupe et un second groupe de galets (10) peuvent se mouvoir dans des directions opposées de sorte que le matériau isolant (3) est aligné de façon désaxée relativement aux éléments formant armature (1).
